# EUROPÄISCHE PATENTSCHRIFT

(11) **EP 1 299 459 B1**
(45) Veröffentlichungstag und Bekanntmachung des Hinweises auf die Patenterteilung: **29.09.2004**
(21) Anmeldenummer: 01949284.2
(22) Anmeldetag: 11.04.2001
(51) Int. Cl.: C08J 3/14, B02C 7/02

(54) **VERFAHREN UND VORRICHTUNG ZUR HERSTELLUNG VON CELLULOSEPARTIKELN**
METHOD AND DEVICE FOR THE PRODUCTION OF CELLULOSE PARTICLES
PROCEDE ET DISPOSITIF POUR LA PRODUCTION DE PARTICULES DE CELLULOSE

(30) Priorität: 29.06.2000 DE 10031655
(43) Veröffentlichungstag der Anmeldung: 09.04.2003
(73) Patentinhaber: Cellcat GmbH, 5400 Hallein (AT)
(72) Erfinder: BRANDNER, Alexander, A-4663 Laakirchen (AT); OBERKOFLER, Jörg, A-5400 Hallein (AT); SPEDDING, Jeff, A-5026 Salzburg (AT)
(74) Vertreter: Kador & Partner
(86) Internationale Anmeldenummer: PCT/EP2001/004194
(87) Internationale Veröffentlichungsnummer: WO 2002/000771

(56) Entgegenhaltungen:
- EP-A- 0 824 106
- EP-A- 0 905 144
- US-A- 2 518 133

## Beschreibung

Die Erfindung betrifft ein Verfahren zur Herstellung von Cellulosepartikeln durch Dispergieren einer Celluloselösung in einem Fällungsmittel, sowie eine Vorrichtung zur Durchführung dieses Verfahrens.

Der Erfindung liegt die Aufgabe zugrunde, ein verbessertes Verfahren und eine Vorrichtung zur Durchführung desselben zur Herstellung von Cellulosepartikeln zu schaffen, mit denen faserförmige Cellulosepartikel (Fibride), die in verschiedener Weise modifiziert sein können, einfach und kostengünstig hergestellt werden können. Insbesondere soll die mittlere Faserlänge der hergestellten Fibride, speziell kleiner Fibride, einstellbar sein bei gleichzeitiger hoher Homogenität des hergestellten Fibridmaterials. Außerdem soll auch die Umstellung von einer Faserlänge auf eine andere ohne großen Aufwand erfolgen können. Schließlich soll das Verfahren und die Vorrichtung die Verwendung einer Vielzahl von Ausgangs- und Zusatzstoffen zur Herstellung der Fibride erlauben.

Der Erfindung liegt die Erkenntnis zugrunde, daß diese Aufgaben durch ein Verfahren zur Herstellung von Cellulosepartikeln gelöst werden können, bei dem eine in einem Regenerierungs- bzw. Fällungsmittel dispergierte Celluloselösung unter der Scherbelastung, die von einem Refiner erzeugt wird, regeneriert bzw. ausgefällt wird.

Gegenstand der Erfindung ist daher ein Verfahren zur Herstellung von Cellulosepartikeln durch Dispergieren einer Celluloselösung in einem Fällungsmittel, das dadurch gekennzeichnet ist, daß die Lösung durch die mit Hilfe eines Refiners erzeugten Scherbelastung im Fällungsmittel dispergiert wird und die Cellulose in dispergierter Form regeneriert bzw. ausgefällt wird.

Durch ein solches Verfahren ist es möglich, faserförmige Cellulosepartikel (Cellulosefibride) mit genau definierter mittlerer Faserlänge herzustellen, ohne daß das Fasermaterial eine breite Verteilung an verschiedenen Faserlängen aufweist, d.h. das so hergestellte Fasermaterial besitzt hervorragende Homogenität.

Insbesondere wird durch das erfindungsgemäße Verfahren die Entstehung von groberem Cellulosematerial, wie zum Beispiel flächenartigen Gebilden, durch unerwünschte Agglomerierung von den in dispergierter Form ausgefällten Cellulosepartikeln nahezu vollständig verhindert. Die erfindungsgemäß hergestellten Cellulosefibride können daher ohne anschließende mechanische Zerkleinerung in der Papierindustrie zur Herstellung hochwertigen Papiermaterials verwendet werden. Darüberhinaus kann mit Hilfe des erfindungsgemäßen Verfahren durch die am Refiner stufenlos einstellbare Mahlspaltbreite ein weites Spektrum an gewünschten mittleren Faserlängen erhalten werden, wobei durch die Mahlspaltbreite auch die maximale mögliche Faserlänge vorgegeben ist.

Im Sinne der vorliegenden Erfindung werden unter Refiner handelsübliche Maschinen zur Mahlung von Faserstoffen für die Papiererzeugung verstanden, wie sie in der Papierindustrie weit verbreitet sind. Solche Refiner dienen insbesondere zur mechanischen Zerfaserung (Fibrillierung) von Holz in Form von Hackschnitzeln zur Erzeugung von "Thermo Mechanical Pump" (TMP), zum Mahlen von Zellstoff in wässriger Suspension, wobei die Mahlung fibrillierend oder kürzend erfolgen kann, und zur Nachmahlung von TMP oder Holzschliff, um gegebenenfalls die erforderliche Schmierigkeit des Stoffes zu erhöhen.

Refiner sind zum Beispiel in L. Göttsching et al., "Papierlexikon", Deutscher Betriebswirte Verlag 1999 auf Seite 22 bis 23 oder in J.P. Casey (Herausgeber), "Pulp and Paper", Verlag John Wiley 1980 auf Seite 223 bis 228 näher beschrieben. Für Refiner ist charakteristisch, daß sie mindestens einen Rotor und einen Stator umfassen, die jeweils eine Zahnung aufweisen, wobei die Zahnungen des Rotors und Stators während der Rotation nicht ineinander greifen und die Breite des Spaltes zwischen Rotor und Stator (Mahlspalt) stufenlos und in einfacher Weise einstellbar ist. Üblicherweise wird bei den Refinern zwischen Kegel- und Scheibenrefinern unterschieden, je nach der Form ihres Rotors. Da solche handelsüblichen Refiner unter anderem für die Zerkleinerung von Holzhackschnitzeln, d.h. für sehr starke Belastungen ausgelegt sind, zeichnen sie sich für die Verwendung im Sinne der vorliegenden Erfindung durch einen sehr zuverlässigen Betrieb, sehr geringen Verschleiß und hohe Betriebssicherheit aus.

Vorzugsweise wird im erfindungsgemäßen Verfahren als Refiner ein Scheibenrefiner eingesetzt. Bei solchen Refinern sind Rotor und Stator jeweils als Scheibe ausgebildet, wobei auf diesen Scheiben Mahlsegmente (Mahlplatten) aus hochfestem Stahl aufgeschraubt sind, die verschiedene Profile (Refinergarnituren) aufweisen können. Scheibenrefiner weisen eine besonders hohe Durchsatzkapazität im herkömmlichen Betrieb auf.

Durch den Einsatz von Scheibenrefinern ist es möglich, das erfindungsgemäße Verfahren in besonders einfacher Weise zu realisieren, wodurch ein zuverlässiger und kostengünstiger Betrieb gewährleistet wird.

In einer bevorzugten Ausführungsform der vorliegenden Erfindung wird das Fällungsmittel über axiale Bohrungen durch die Statorscheibe und -platte des Refiners in den Mahlspalt zwischen Rotor und Stator eingebracht. Dadurch wird die Cellulose erst in dem Bereich des Refiners ausgefällt, in dem die Dispersion aus Celluloselösung und Fällungsmittel einer hohen Scherbelastung ausgesetzt ist. Somit wird zum einen gewährleistet, daß die dispergierten Cellulosetröpfchen beim Ausfällen in stark elongierter Form, d.h. faserförmig vorliegen und zum anderen wird auch der Bildung von Cellulosepartikelagglomeraten entgegengewirkt.

Bevorzugterweise wird der Refiner bei einer Rotordrehzahl von 600 - 3600 min ⁻¹ betrieben. Auf diese Weise wird eine ausreichend hohe Scherbelastung zur Dispergierung der Celluloselösung im Fällungsmittel bei gleichzeitig optimaler Betriebsweise des Refiners erreicht.

Weiter bevorzugt wird der Refiner bei einer Temperatur von 40° C bis 70° C betrieben. Dadurch wird eine ausreichende Reaktionsgeschwindigkeit des Regenerierungsschrittes bei gleichzeitig geringem Beheizungsaufwand sichergestellt.

In einer bevorzugten Ausführungsform wird das aus dem Refiner abgezogene Reaktionsgut noch weiter erhitzt. Auf diese Weise wird eine Beschleunigung der vollständigen Regenerierung der faserförmigen Cellulosepartikel erreicht.

Vorzugsweise wird der Celluloselösung vor der Dispergierung im Fällungsmittel Verdünnungswasser zugesetzt.

Erfindungsgemäß wird zur bevorzugten Durchführung des Herstellungsverfahrens eine Vorrichtung verwendet, die einen Scheibenrefiner umfaßt, wobei zur Einführung des Fällungsmittels axiale Bohrungen durch die Statorscheibe und -platte des Refiners vorgesehen sind. Zwischen der Rotor- und der Statorscheibe des Scheibenrefiners kann ein (Mahl-)spalt gewünschter Breite stufenlos in einfacher Weise eingestellt werden. Dadurch ist es möglich, die mittlere Länge der mit der Vorrichtung hergestellten Cellulosefibride in gewünschter Weise gezielt zu variieren. Durch die Bohrungen in der Statorplatte des Scheibenrefiners zur Einführung des Fällungsmittels wird gewährleistet, daß der Kontakt zwischen Fällungsmittel und Celluloselösung, die über die zentrale Standardaufgabeöffnung des Refiners zugeführt wird, erst in dem Teil des Refiners erfolgt, in dem der Refiner eine starke Scherwirkung auf das Reaktionsgemisch ausübt. Dadurch ist sichergestellt, daß die Cellulose erst in dispergierter, faserartiger Form vom Fällungsmittel ausgefällt und damit regeneriert wird.

Im folgenden wird die vorliegende Erfindung unter Hinweis auf die beigefügte Zeichnung näher beschrieben.

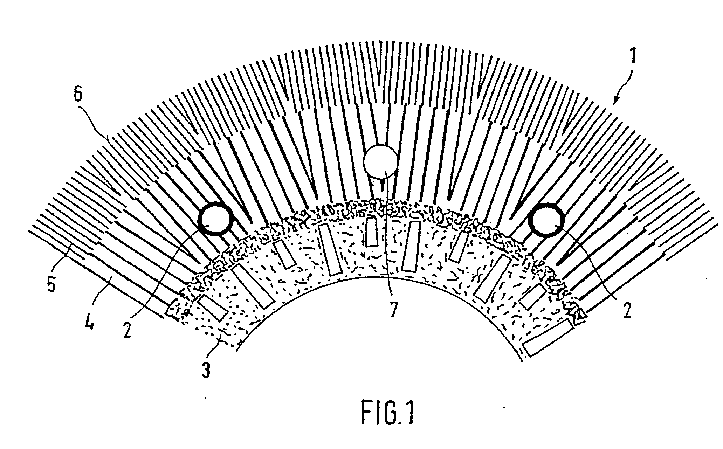

- Figur 1: zeigt eine Aufsicht auf einen Ausschnitt der mit der Zahnung versehenen Seite der Statorplatte (Refinergarnitur D2 C505 der Firma Andritz) des in einer bevorzugten Ausführungsform verwendeten Scheibenrefiners.

Zur Durchführung des erfindungsgemäßen Verfahrens sind Celluloselösungen jeglicher Art geeignet. Die Herstellung der Celluloselösung kann in einem Mischorgan, zum Beispiel einem "Pump-Dispergator" erfolgen. Bei den Celluloselösungen unterscheidet man insbesondere zwischen Celluloselösungen, in denen die Cellulose chemisch umgesetzt wird, z.B. unter Bildung eines Xanthogenats, und Celluloselösungen in denen die Cellulose gelöst vorliegt. Beide Lösungsarten können im erfindungsgemäßen Verfahren eingesetzt werden.

Zur Herstellung der im erfindungsgemäßen, Verfahren eingesetzten Celluloselösung können Cellulose bzw. Cellulosederivate, Zellstoff, Linters, MC, CMC, HEC, Celluloseacetat und/oder dessen Derivate, Cellulosexanthogenat, Cellulosecarbamat, sowie Chitinderivate verwendet werden.

Die Gewinnung der Cellulosefibride aus diesen Lösungen erfolgt durch Regenerierung bzw. Ausfällung der Cellulose aus der Lösung mit Hilfe eines Fällungsmittels.

Als Lösungsmittel bzw. Lösungsmittelsystem für die Cellulose bzw. Cellulosederivate können beispielsweise Wasser, Aceton, Aminoxio/Wasser, N-Methylmorpholin-N-Oxid/Wasser, wässrige Natronlauge, Cuoxam, Cuen, alkalisches Eisentartratsystem (EWNN), DMSO/Paraformaldehyd, LiCl mit N,N-Dimethylacetamid, LiCl mit N-Methylpyrrollidon, LiCl mit DMSO, Trifluoressigsäure/Dichlormethan, Calciumthiocyanat/Wasser oder Ammoniak/Ammoniumthiocyanat eingesetzt werden.

Zur Regenerierung der Cellulosepartikel können als Fällungsmittel beispielsweise verdünnte Mineralsäuren, Alkohole, Aceton oder Wasser verwendet werden. Besonders bevorzugt sind dabei die Fällungsmittel verdünnte Schwefelsäure, sowie ein Gemisch aus Wasser und Lösungsmittel.

Die Auswahl des zur Fällung der Cellulose geeigneten Fällungsmittels richtet sich jeweils nach der Natur der Celluloselösung und kann vom Fachmann routinemäßig durchgeführt werden. So wird zum Beispiel bei Einsatz von Cellulosexanthogenat oder Cellulosecarbamat in wässriger Natronlauge als Celluloselösung zur Fällung der Cellulose bevorzugterweise verdünnte Schwefelsäure verwendet. Bei wässrigen Celluloselösungs-Systemen können Nichtlösungsmittel wie Alkohole oder Aceton als Fällungsmittel eingesetzt werden.

Um die Eigenschaften der mit dem erfindungsgemäßen Verfahren herstellbaren Cellulosefibride in gewünschter Weise zu variieren, können der Celluloselösung noch Zusatzstoffe wie beispielsweise Kationisierungsmittel, Anionisierungsmittel, Anti-Bakterizide, Füllstoffe u.ä. zugesetzt werden.

Zur Herstellung von kationisierten Cellulosefibride wird die Celluloselösung mit einem Kationisierungsmittel versetzt. Vorzugsweise geschieht dies, nachdem die Cellulose bereits vollständig in gelöster Form vorliegt. Als Kationisierungsmittel können beispielsweise Aluminiumsalze wie Polyaluminiumchlorid, das auch teilweise hydrolisiert sein kann, oder Natriumaluminat eingesetzt werden. Ferner können kationische Polyelektrolyte wie Polydialkyl-diallyl-ammonium-Salze, insbesondere Polydialkyl-diallyl-ammoniumchlorid, Dicyandiamid, Dicyandiamidkondensat, Polyamide, Polyimide, wie Polyethylenimin oder Ionene verwendet werden. Weiterhin können als Kationisierungsmittel auch reaktive Monomere, wie beispielsweise primäre, sekundäre und tertiäre Amine, sowie quartemäre Ammoniumbasen mit jeweils wenigstens einem mit einer Hydroxylgruppe der Cellulose umsetzbaren Rest eingesetzt werden.

Der gegebenenfalls mit Kationisierungsmittel oder anderen Zusatzstoffen versetzten Celluloselösung kann vor der Aufgabe auf den Refiner noch Verdünnungswasser zugegeben werden.

Die Celluloselösung bzw. verdünnte Celluloselösung wird über die zentrale Standardaufgabeöffnung des Refiners aufgegeben, gegebenenfalls nach vorherigem Aufheizen auf eine gewünschte Temperatur.

Im folgenden wird das erfindungsgemäße Verfahren in der bevorzugten Ausführungsform unter Verwendung eines Scheibenrefiners weiterbeschrieben, ohne daß der Schutz der vorliegenden Erfindung auf diese Ausführungsform beschränkt sein soll.

Ein Scheibenrefiner umfaßt eine Stator- und eine Rotorscheibe, auf denen jeweils eine Stator- bzw. Rotorplatte angebracht sind. Figur 1 zeigt eine solche Statorplatte (1). Zur Anbringung auf den Scheiben sind in den Platten Bohrungen (2) vorgesehen. Die Platten weisen von innen nach außen feiner werdende Profile auf. Der im Ausführungsbeispiel verwendete Plattentyp weist beispielsweise drei Profilarten auf Das innerste Profil (3) besitzt eine relativ große Profiltiefe und wenige, grobe Stege. Im mittleren Profil (4) ist die Profiltiefe deutlich geringer und die Stege sind feiner. Im äußeren Profil (5) ist die Tiefe nochmals geringer und die Stege sind noch feiner.

Die zentrale Standardaufgabeöffnung des Scheibenrefiners befindet sich in der Mitte der Statorscheibe. Durch die Rotation der Rotorscheibe wird die aufgegebene Flüssigkeit aufgrund der auftretenden Fliehkräfte durch den Mahlspalt zum äußeren Rand der Refinerplatten (6) hin bewegt.

Zur Aufgabe des Fällungsmittels sind durch die Statorscheibe und -platte (1) des Refiners axiale Bohrungen (7) in der Weise angebracht, daß die Aufgabe des Fällungsmittels erst kurz vor dem Bereich des feinen äußeren Profils (5) der Stator- bzw. Rotorplatte erfolgt, in dem die höchste Scherbelastung in der aufgegebenen Mischung durch den Refiner erzeugt wird. Soll bei erhöhter Temperatur gearbeitet werden, kann das Fällungsmittel vorgeheizt werden.

Die Aufgabebohrungen (7) weisen zweckmäßigerweise alle denselben radialen Abstand vom Zentrum der Statorplatte auf, sie liegen also auf einem Kreis. Die Anzahl der Bohrungen (7) richtet sich zum einen nach dem Durchmesser des Kreises, auf dem sie angeordnet sind, und zum anderen nach dem zum Einsatz kommenden Fällungsmittel. Es muß sichergestellt sein, daß die Bohrungen (7) auf dem Kreis so dicht aufeinanderfolgen, daß die Celluloselösung auf der gesamten Fläche der Platten mit dem Fällungsmittel in Berührung kommt. Die Anzahl der Bohrungen (7) ist damit ebenfalls abhängig von der Umfangsgeschwindigkeit der rotierenden Platte, d.h. der Drehzahl bei der der Refiner betrieben wird, da durch eine Erhöhung der Umfangsgeschwindigkeit auch die auftretenden Fliehkräfte erhöht werden.

Der Durchmesser der Bohrungen richtet sich nach dem zur Aufgabe des Fällungsmittels notwendigen Druck, der durch den vom Refiner erzeugten Druck der Celluloselösung abhängig ist. Im allgemeinen ergibt sich ein Refinerdruck von etwa 3-4 bar, so daß der Durchmesser der Bohrungen so klein gewählt werden muß, daß der Druck des Fällungsmittels hoch genug ist, um ein Zurückdrücken der Fällungsmittelflüssigkeit bzw. der Celluloselösung in die Aufgabebohrungen (7) zu vermeiden.

Durch die Rotation der Rotorplatte wird das Fällungsmittel zusammen mit der Celluloselösung zum Rand der Platten (6) des Refiners hin bewegt. Durch die Aufgabe des Fällungsmittels entsteht eine Dispersion von Tröpfchen der Celluloselösung im Fällungsmittel. Dabei kommt es durch das feine Profil (5) der Refinerplatten im Bereich nach der Aufgabe des Fällungsmittels zu einer starken Scherbelastung der Dispersionströpfchen der Celluloselösung und damit zur Ausbildung von elongierten, faserförmigen Lösungströpfchen.

Durch die Umgebung der Tröpfchen mit Fällungsmittel wird die Cellulose an der äußeren Oberfläche der faserförmigen Tröpfchen regeneriert, d.h. es bildet sich eine sogenannten Regenerathaut an der Oberfläche der dispergierten Tröpfchen. Nach der Bildung der Regenerathaut ist zum einen kein Verkleben der einzelnen Cellulosefibride mehr möglich und zum anderen können die Cellulosetröpfchen selbst bei Wegfall der Scherbelastung nicht mehr in eine Kugelform kontrahieren.

Die Bildung der Regenerathaut ist nach etwa 0.1 s Reaktionsdauer bereits abgeschlossen. Zweckmäßigerweise wird daher die Verweilzeit der Dispersion aus Celluloselösung und Fällungsmittel über den Durchsatz an Produkt auf etwa diesen Zeitraum eingestellt.

Durch entsprechende Auswahl der Refinerplatten und die Voreinstellung der Mahlspaltbreite zwischen Rotor- und Statorplatte des Refiners ist die mittlere Teilchenlänge der Cellulosefibride genau vorherbestimmt. Auch die maximale Teilchenlänge ist durch die Mahlspaltbreite vorgegeben.

Die Dispersion aus mit Regenerathaut überzogenen faserförmigen Cellulosetröpfchen und Fällungsmittel wird nachdem sie den Außenumfang der Refinerscheiben erreicht hat vom Refiner abgezogen. Anschließend kann die Dispersion noch weiter erhitzt werden, um die Reaktionsgeschwindigkeit des Durchregenerierens der Cellulosetröpfchen zu beschleunigen.

Die vollständig regenerierten Cellulosefibride können anschließend erforderlichenfalls entgast, gewaschen und entwässert werden. Dies kann über einen Bandfilter, einen Dekanter oder eine Doppelsiebpresse erfolgen. Die Cellulosefibride fallen als Kuchen oder Vlies mit einem Trockengehalt von etwa 25% an.

Im folgenden wird ein Ausführungsbeispiel der vorliegenden Erfindung beschrieben.

### Beispiel:

Im vorliegenden Beispiel wurden in mehreren Ansätzen kationisierte Cellulosefibride hergestellt. Als Refiner wurde jeweils der Drucklaborrefiner 12-CP der Firma Andritz benutzt. Bei diesem Refiner handelt es sich um einen Scheibenrefiner mit einer Stator- und einer Rotorscheibe, wobei diese Scheiben mit Platten versehen waren, die das Plattenmuster (Refinergarnitur) D2C505 aufweisen (siehe Figur 1). Der verwendete Refinertyp ist für eine maximale Antriebsleistung von 55 kW geeignet. Die maximale Drehzahl beträgt 3600 min⁻¹.

Als Celluloselösung wurde eine Lösung von Cellulosexanthogenat in wäßriger Natronlauge mit einem Überschuß von 5% NaOH eingesetzt ("Viskoselösung"). Vor der Aufgabe auf den Refiner wurden zur Herstellung der mit Kationisierungsmittel versetzten Celluloselösung zunächst jeweils auf 1 m³ Celluloselösung mit 8,6% Cellulosegehalt über pulsationsarme Dosierpumpen 158,6 l/h Kationisierungsmittel Cartafix® DPR, Clariant (20% Aktivsubstanzgehalt), und die in Tabelle 1 für den jeweiligen Versuch angegebene Menge Verdünnungswasser über konzentrische Zuführdüsen einem Dispax- Reaktor DR3/6 2465 von IKA zufgeführt.

Dabei wurden das Kationisierungsmittel und das Verdünnungswasser gemeinsam mit einer zentralen Einspritzdüse und die Viskoselösung über ein konzentrisch über dieser Einspritzdüse angeordnetes Rohr eingebracht. Die auf diese Weise homogenisierte Lösung von Cellulose und Kationisierungsmittel wurde über die zentrale Standardaufgabeöffnung des Scheibenrefiners aufgegeben.

Als Fällungsmittel wurde verdünnte Schwefelsäure in der in Tabelle 1 angegebenen Menge und Konzentration eingesetzt. Zur Aufgabe des Fällungsmittels waren durch die Statorscheibe und -platte (1) des Refiners bei einem Plattendurchmesser von 300 mm drei axiale Aufgabebohrungen (7) im Abstand von jeweils 120° auf einem Kreisumfang im radialen Abstand von 105 mm vom Mittelpunkt der Scheibe im Bereich vor dem feinen Profil (5) angebracht.

Die mit Kationisierungsmittel versehene Celluloselösung, sowie das Fällungsmittel wurden vor der Aufgabe auf den Refiner jeweils auf eine Temperatur von 40° C vorgeheizt.

Das eingesetzte Fällungsmittel wurde durch die Bohrungen (7) auf den Refiner aufgegeben. In Tabelle 1 sind die Qualitätsdaten der Cellulosefibride aufgelistet, die mit dieser Versuchsordnung bei unterschiedlichen Prozeßvariablen durchgeführten Ansätzen erhalten wurden.

Die in Tabelle 1 angegebeben Vol %- Werte des Anteils an Verdünnungswasser bzw. Säureanteils beziehen sich jeweils auf den Wert 100 Vol % für die eingesetzte Celluloselösung. Die angegebene Mahlspaltweite bezieht sich auf die am Refiner eingestellte Spaltweite. Bei den in den Ansätzen verwendeten Prozeßbedingungen ist die Druckbelastung im Refinerspalt so hoch, daß selbst bei eingestellten negativen Spaltweiten tatsächlich positive Werte erhalten werden. Der Mahlgrad würde nach der Ö-Norm A-1118 bestimmt, die weitgehend mit den Normen DIN ISO 5267-1 und ISO 5267-1 übereinstimmt.

Die in Tabelle 1 aufgelisteten Versuche zeigen deutlich, daß die mittlere Faserlänge durch die Einstellung der Mahlspaltbreite des Refiners sowie des Säureanteils/Konzentration und der Refinerdrehzahl in der erwünschten Weise einstellbar ist. Des weiteren zeigen die Versuche, daß nicht eine breite Verteilungskurve an verschiedenen Faserlängen erhalten wird, sondern ein ganz überwiegender Anteil an gewünschten Kurzfasem erhalten wird.

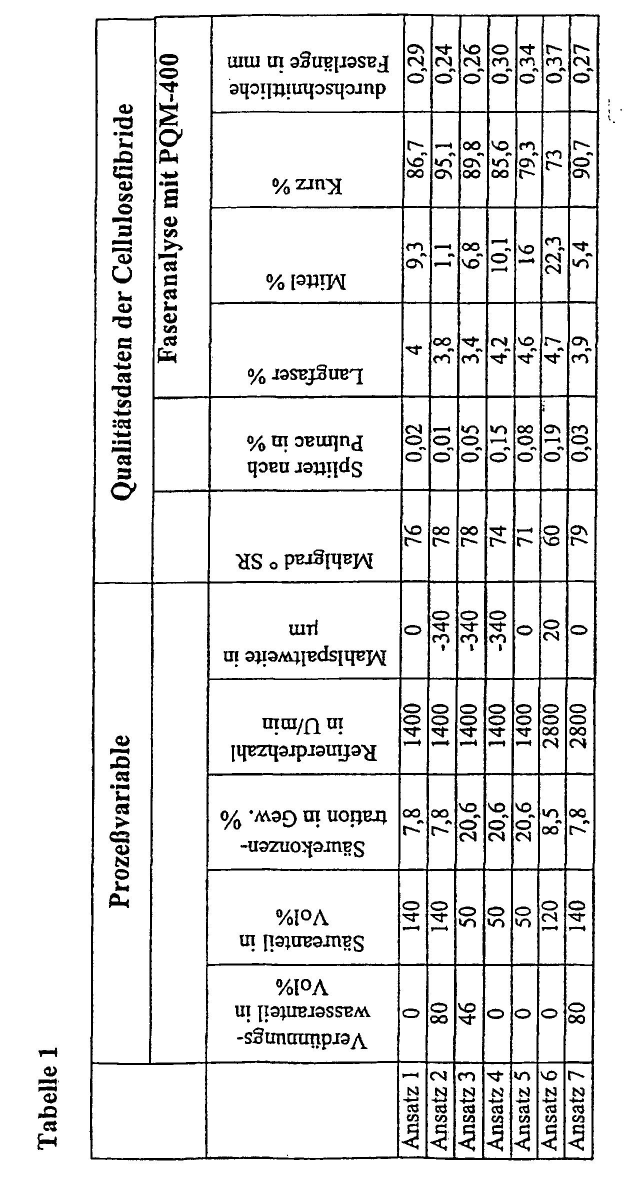

## Patentansprüche

1. Verfahren zur Herstellung von Cellulosepartikeln durch Dispergieren einer Celluloselösung in einem Fällungsmittel, **dadurch gekennzeichnet, daß** die Lösung durch die mit Hilfe eines Refiners erzeugten Scherbelastung im Fällungsmittel dispergiert wird und die Cellulose in dispergierter Form regeneriert bzw. ausgefällt wird.

2. Verfahren nach Anspruch 1, **dadurch gekennzeichnet, daß** als Refiner ein Scheibenrefmer eingesetzt wird.

3. Verfahren nach Anspruch 2, **dadurch gekennzeichnet, daß** das Fällungsmittel über axiale Bohrungen (7) durch die Statorscheibe und -platte (1) in den Spalt zwischen Rotor und Stator gebracht wird.

4. Verfahren nach Ansprüchen 2 oder 3, **dadurch gekennzeichnet, daß** der Refiner bei einer Rotordrehzahl von 600 bis 3600 min⁻¹ betrieben wird.

5. Verfahren nach einem der vorhergehenden Ansprüche, **dadurch gekennzeichnet, daß** der Refiner bei 40° C bis 70° C betrieben wird.

6. Verfahren nach einem der vorhergehenden Ansprüche, **dadurch gekennzeichnet, daß** das aus dem Refiner abgezogene Reaktionsgut weiter erhitzt wird.

7. Verfahren nach einem der vorhergehenden Ansprüche, **dadurch gekennzeichnet, daß** der Lösung vor der Dispergierung Verdünnungswasser zugesetzt wird.

8. Verfahren nach einem der vorstehenden Ansprüche, **dadurch gekennzeichnet, daß** die Celluloselösung mit einem Kationisierungsmittel versetzt wird.

9. Verfahren nach Anspruch 8, **dadurch gekennzeichnet, daß** als Kationisierungsmittel Aluminiumsalze, kationische Polyelektrolyte oder reaktive Monomere eingesetzt werden.

10. Verfahren nach einem der vorhergehenden Ansprüche, **dadurch gekennzeichnet, daß** die Celluloselösung aus Cellulose bzw. Cellulosederivaten, Zellstoff, Linters, MC, HEC, Celluloseacetat und/oder dessen Derivaten, sowie Chitinderivaten hergestellt wurde.

11. Verfahren nach einem der vorhergehenden Ansprüche, **dadurch gekennzeichnet, daß** als Lösungsmittel Wasser, Aceton, Aminoxid/Wasser, N-Methylmorpholin-N-Oxid/Wasser, wässrige Natronlauge, Cuoxam, Cuen, alkalisches Eisentartratsystem (EWNN), DMSO/Paraformaldehyd, LiCl mit N,N-Dimethylacetamid, LiCl mit N-Methylpyrrollidon, LiCl mit DMSO, Trifluoressigsäure/Dichlormethan, Calciumthiocyanat/Wasser oder Ammoniak/Ammoniumthiocyanat eingesetzt wird.

12. Verfahren nach einem der vorhergehenden Ansprüche, **dadurch gekennzeichnet, daß** das Fällungsmittel verdünnte Mineralsäuren, Alkohole, Aceton oder Wasser umfaßt.

13. Verfahren nach Anspruch 12, **dadurch gekennzeichnet, daß** als Fällungsmittel verdünnte Schwefelsäure eingesetzt wird.

14. Verfahren nach Anspruch 12, **dadurch gekennzeichnet, daß** als Fällungsmittel ein Gemisch aus Wasser und Lösungsmittel eingesetzt wird.

15. Verfahren nach einem der vorhergehenden Ansprüche, **dadurch gekennzeichnet, daß** die Cellulosepartikel erforderlichenfalls entgast und unter Verwendung eines Bandfilters, eines Dekanters oder einer Doppelsiebpresse gewaschen und entwässert werden.

16. Vorrichtung zur Herstellung von Cellulosepartikeln, **dadurch gekennzeichnet, daß** sie einen Scheibenrefiner umfaßt, der zur Einführung des Fällungsmittels axiale Bohrungen (7) durch die Statorscheibe und platte (1) aufweist.

## Claims

1. A method for producing cellulose particles by dispersing a cellulose solution in a precipitant, **characterized in that** the solution is dispersed by the shearing load produced with the help of a refiner in the precipitant, and the cellulose is regenerated or precipitated in dispersed form.

2. A method according to claim 1, **characterized in that** the refiner used is a disk refiner.

3. A method according to claim 2, **characterized in that** the precipitant is brought into the gap between rotor and stator via axial bores (7) through the stator disk and plate (1).

4. A method according to claim 2 or 3, **characterized in that** the refiner is operated at a rotor speed of 600 to 3600 min⁻¹.

5. A method according to any of the previous claims, **characterized in that** the refiner is operated at 40°C to 70°C.

6. A method according to any of the previous claims, **characterized in that** the reaction material removed from the refiner is heated further.

7. A method according to any of the previous claims, **characterized in that** diluent water is added to the solution prior to dispersion.

8. A method according to any of the above claims, **characterized in that** the cellulose solution is mixed with a cationizing agent.

9. A method according to claim 8, **characterized in that** the cationizing agents used are aluminum salts, cationic polyelectrolytes or reactive monomers.

10. A method according to any of the previous claims, **characterized in that** the cellulose solution was produced from cellulose or cellulose derivatives, pulp, linters, MC, HEC, cellulose acetate and/or derivatives thereof, and chitin derivatives.

11. A method according to any of the previous claims, **characterized in that** the solvent used is water, acetone, amine oxide/water, N-methylmorpholine-N-oxide/water, aqueous sodium hydroxide, cuoxam, CED, alkaline iron tartrate system (EWNN), DMSO/paraformaldehyde, LiCl with N,N-dimethylacetamide, LiCl with N-methylpyrrolidone, LiCl with DMSO, trifluoroacetic acid/dichloromethane, calcium thiocyanate/water or ammonia/ammonium thiocyanate.

12. A method according to any of the previous claims, **characterized in that** the precipitant includes diluted mineral acids, alcohols, acetone or water.

13. A method according to claim 12, **characterized in that** the precipitant used is diluted sulfuric acid.

14. A method according to claim 12, **characterized in that** the precipitant used is a mixture of water and solvent.

15. A method according to any of the previous claims, **characterized in that** the cellulose particles are degassed, if required, and washed and dehydrated using a band filter, a decanter or a twin wire press.

16. An apparatus for producing cellulose particles, **characterized in that** it comprises a disk refiner having axial bores (7) through the stator disk and plate (1) for introducing the precipitant.

## Revendications

1. Procédé de préparation de particules de cellulose par dispersion d'un solvant de la cellulose dans un précipitant, **caractérisé en ce que** la solution, au moyen de la contrainte de cisaillement produite à l'aide d'un raffineur, est dispersée dans un précipitant et **en ce que** la cellulose est régénérée ou précipitée sous forme dispersée.

2. Procédé selon la revendication 1, **caractérisé en ce qu'**un raffineur à disque est utilisé comme raffineur.

3. Procédé selon la revendication 2, **caractérisé en ce que** le précipitant est introduit par les alésages axiaux (7) à travers le disque et la plaque de stator (1) dans l'écartement entre le rotor et le stator.

4. Procédé selon la revendication 2 ou 3, **caractérisé en ce que** le raffineur est actionné à une vitesse de rotation du rotor de 600 à 3 600 mn⁻¹.

5. Procédé selon l'une des revendications précédentes, **caractérisé en ce que** le raffineur est actionné à une température comprise entre 40° C et 70° C.

6. Procédé selon l'une des revendications précédentes, **caractérisé en ce que** le produit de réaction obtenu en sortie du raffineur est chauffé ultérieurement.

7. Procédé selon l'une des revendications précédentes, **caractérisé en ce que** la solution de l'eau de dilution est ajoutée avant la dispersion.

8. Procédé selon l'une des revendications précédentes, **caractérisé en ce que** la solution de cellulose est mélangée à un agent de cationisation.

9. Procédé selon la revendication 8, **caractérisé en ce que**, comme agent de cationisation, des sels d'aluminium, des polyélectrolytes ou des monomères réactifs sont utilisés.

10. Procédé selon l'une des revendications précédentes, **caractérisé en ce que** la solution de cellulose est préparée à partir de cellulose ou de dérivés cellulosiques, de pâte de cellulose, de fibres courtes, de MC, de HEC, d'acétate de cellulose et/ou de leurs dérivés, de même qu'à partir de dérivés de la chitine.

11. Procédé selon l'une des revendications précédentes, **caractérisé en ce que**, comme solution de solvant, l'acétone, une solution d'aminooxyde/eau, une solution de N-oxyde de N-méthylmorpholine, de soude caustique aqueuse, d'oxyde de cuivre ammoniacale, de cuivre émaillé, d'un système de tartrate ferreux alcalin (EWNN), de DMSO/paraformaldéhyde, de LiCl combiné à NN-diméthylacétamide, de LiCl combiné à N-méthylpyrrolidone, de LiCl combiné à DMSO, d'acide trifluoroacétique/dichlorométhane, de sulfocyanure de calcium/eau ou de chlorure d'ammoniac/thiocyanate d'ammonium est utilisée.

12. Procédé selon l'une des revendications précédentes, **caractérisé en ce que** le précipitant comprend des acides minéraux dilués, une fonction alcool, de l'acétone ou de l'eau.

13. Procédé selon la revendication 12, **caractérisé en ce que**, comme précipitant, de l'acide sulfurique dilué est utilisé.

14. Procédé selon la revendication 12, **caractérisé en ce que**, comme précipitant, un mélange d'eau et de solvant est utilisé.

15. Procédé selon l'une des revendications précédentes, **caractérisé en ce que** les particules de cellulose sont introduites en fonction des besoins et sont lavées et séchées en utilisant un filtre à bande, un décanteur ou une extrudeuse à trous et à double vis.

16. Dispositif pour la préparation de particules de cellulose, **caractérisé en ce qu'**il comprend un raffineur à disque qui, en vue de l'introduction du précipitant, comporte des alésages axiaux (7) traversant le disque et la plaque du stator.
